# EUROPEAN PATENT APPLICATION

(11) **EP 3 070 030 A1**
(43) Date of publication of application: **21.09.2016**
(21) Application number: 15159787.9
(22) Date of filing: 19.03.2015
(51) Int. Cl.: B65G 19/20, B65G 19/24

(54) **TRANSFER CHAIN WITH THREADED FORM**

(30) Priority: 17.03.2015 TR 201503220
(71) Applicant: Eginlioglu, Hasan Ali, Balikesir (TR)
(72) Inventor: Eginlioglu, Hasan Ali, Balikesir (TR)
(74) Representative: Dereligil, Ersin

(57) **Abstract**

The present invention is a transfer chain (10) comprised in conveyor systems in pharmaceutical industry, paint industry, chemical industry, glass industry and recycling facilities, and especially in dry feeding systems of farm animals; comprising interconnected chain links (1) and discs (2) connected to disc connection points (3) on said chain links (1) characterized in further comprising threaded form (4) at said disc connection points (3) on said chain link (1).

## Description

### Technical Field

The invention relates to transfer chains used for transportation of products, comprised in conveyor systems in fields that require transfer of products with said conveyor systems.

The invention especially relates to transfer chains, which have chain links with threaded form, used in dry feeding systems of farm animals notably pig and chicken.

### State of the Art

Today, conveyors with transfer chains are used in transporting products with granular structure. These types of products are transported from one point to another inside the pipeline by means of discs connected on chain links in transfer chains. This transport system is used especially in feeding of farm animals in farms.

In the prior art, there are some disadvantages in the transfer chains used in the conveyors. Most important of these disadvantages is the fact that the discs cannot adequately adhere to the metal chain link and slip. In this case, discs lose their function in the line and make the transportation of products difficult. Another disadvantage is that the discs wear quickly. Also in this case, adequate efficiency in transporting the products cannot be obtained and discs must be renewed frequently. Another problem is that the sections of the chains that contact each other (radius) wear easily. Also in this case, chain links separate after a while and a durable use cannot be provided.

Due to all the problems mentioned above, the lengths of feeding systems are short. Systems require constant maintenance. Chains must be replaced periodically. This causes extra cost and system cannot be used during maintenance. Moreover, slipping discs prevent the animals from being fed equally.

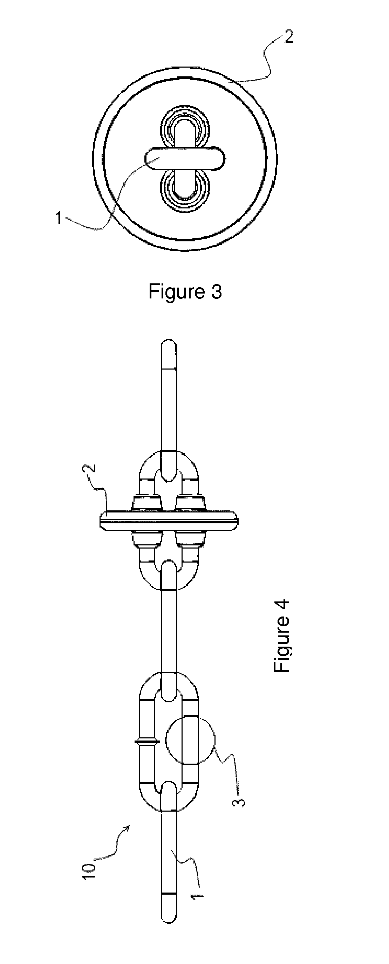

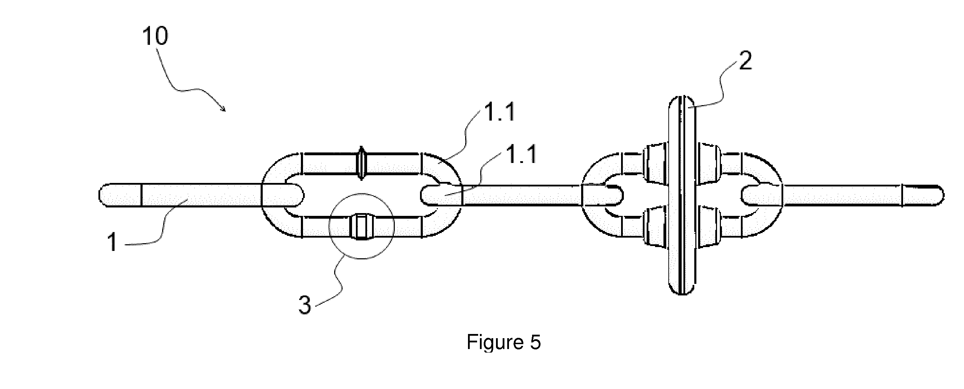

In Figures 4 and 5, two alternative embodiments of the transfer chain (10) included in the conveyor transport systems used in the prior art are shown. In these embodiments, the disc connection points (3) situated on the chain link (1) cannot provide the disc (2) to hold on to the chain with adequate strength.

As can be seen in Figure 4, there is not any area on the disc connection point (3) for the disc (2) to hold on to. In Figure 5, adherence is tried to be achieved by forming steps towards the flow direction (right or left) of the chain by applying pressure on the rear section at disc connection point (3). However, in the tests conducted and during use, the improvement in Figure 5 is found inadequate.

In the search concerning the state of the art, TR2009/09776 numbered application with "Conveyor With Chains" invention title regarding the subject was encountered. In this application, conveyor with chains used for transporting small and granular products from one point to another is disclosed.

Another application encountered in the search concerning the state of the art is the invention No.CN201713055U, titled "Piston disc type delivery device". In this application transport instrument with transfer chain is mentioned. However, in these applications, a structure that can solve the disadvantages stated above was not mentioned.

As a result, the existence of abovementioned problems and inadequacy of current solutions made it obligatory to make an improvement in the technical field.

### Object of the Invention

The invention relates to a transfer chain developed in order to eliminate the abovementioned disadvantages and bring new advantages to the relevant technical field.

The main object of the transfer chain according to the invention is to provide strong adherence of the disc due to threaded form created on disc connection points on chain links. The threaded form made on the back of the chain link increased the adherence strength of the disc up to the range of 1000kg - 1150 kg during conveyor chain's flow towards right or left.

Another object of the invention is to obtain a durable and lasting transfer chain.

Another object of the invention is to reduce the maintenance requirements of the transfer chain. By this way, maintenance costs and halts due to maintenance will be reduced. Another object of the invention is to extend the lengths of product transport systems that have conveyors with transfer chain. When its use in feeding systems is considered, more animals can be fed due to long feeding system and energy saving is achieved by reducing the number of motors. Thus, investment costs are reduced.

Another object of the invention is to manufacture the discs from Ultramid® class product, which has the highest wearing resistance of polyamide group, and thus, to increase wearing resistance. (Product of Ultramid® BASF Corporation.)

Another purpose of the invention is to increase wearing resistance of the sections of the chains that contact each other (radius) by using 20MnB4 material with high carburization characteristic and that can be hardened to the core.

Said advantages can be achieved in most general sense with threaded forms created on disc connection points on chain link.

The structural and characteristic features and all the advantages of the present invention will be more clearly understood thanks to the figures below and the detailed description written with reference to those figures. Therefore, the evaluation needs to be done by taking said figures and the detailed description into consideration.

### Figures for a Better Understanding of the Invention

Figure 1. It is the view of an alternative embodiment of transfer chain according to the invention and Detail A shown on this embodiment.
Figure 2. It is the view of an alternative embodiment of transfer chain according to the invention from a different angle and Detail B shown on this embodiment.
Figure 3. It is the front view of an alternative embodiment of transfer chain according to the invention.
Figure 4. It is the view of a transfer chain related to prior art.
Figure 5. It is the view of a transfer chain related to prior art.

### Part References

10. Transfer chain
   1. Chain link
      1.1. Radius
   2. Disc
   3. Disc connection point
   4. Threaded form
      4.1. Thread

### Detailed Description of the Invention

In this detailed description, the preferred embodiments of the transfer chain (10) according to the present invention are described only for the subject to be understood better without any limiting effect.

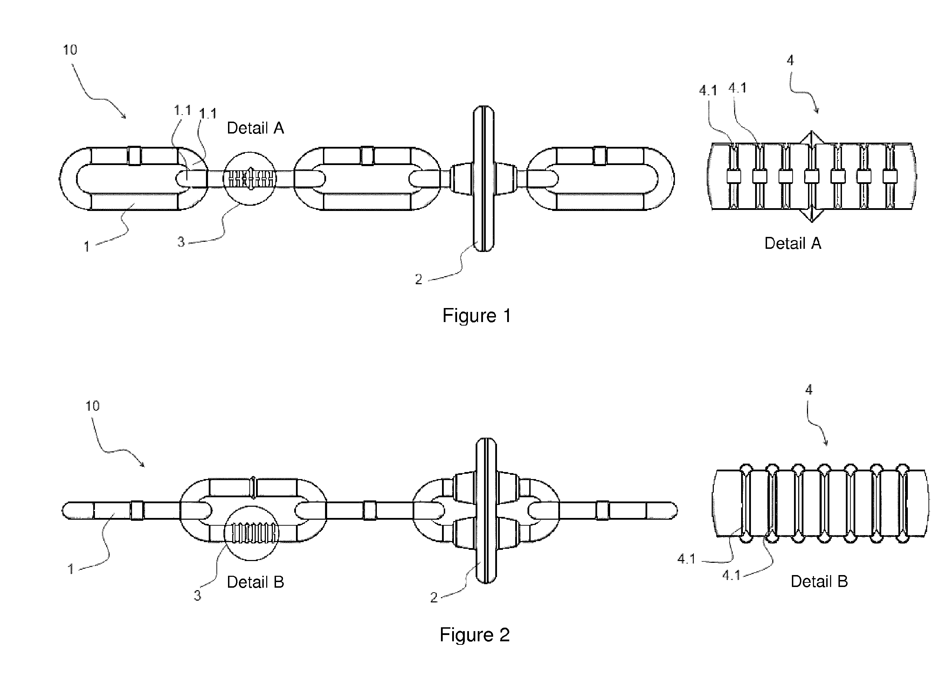

In Figure 1, the view of an alternative embodiment of transfer chain (10) according to the invention and Detail A shown on this embodiment. According to this, said transfer chain (10) consists of chain links (1) and discs (2) connected on one of two consecutive chain links (1). Said discs (2) are connected on the chain link (1) from disc connection points (3). Said disc connection points (3) have threaded form (4) (see Detail A, Detail B). Said threaded form (4) is created by threads (4.1) cut adjacently on the back of the chain link (1). With the threaded form (4), adherence area of the disc (4) to the chain link (2) is created.

Transfer chain (10) with threaded form (4) according to the invention is especially used in dry feeding systems of farm animals, notably pigs and chickens. Apart from this, it is used in pharmaceutical industry, dyeing industry, chemical industry, glass industry and recycling facilities in transfer chains of conveyor systems.

Said discs (2) are preferably made of polyamide material. The radius (1.1) sections of the chain links are made of 20MnB4 material with high carburization characteristic and that can be hardened to the core. Surface is hardened with 55 HRC (Rockwell hardness) and core is hardened with 42 JRC and the elongation and deformation of the system is eliminated.

## Claims

1. A transfer chain (10) comprised in conveyor systems in pharmaceutical industry, dyeing industry, chemical industry, glass industry and recycling facilities, and especially in dry feeding systems of farm animals; comprising interconnected chain links (1) and discs (2) connected to disc connection points (3) on said chain links (1) **characterized in comprising** threaded form (4) at said disc connection points (3) on said chain link (1).

2. A transfer chain (10) according to Claim 1 **characterized in that** said disc (2) is made of polyamide material.

3. A transfer chain (10) according to Claim 1 **characterized in that** said radius (1.1) surfaces, where said chain links (1) are connected to each other, are made of 20MnB4 material with high carburization characteristic and that can be hardened to the core.
